Europäisches Patentamt

European Patent Office

Office européen des brevets

(19)

(11) Publication number: **0 052 846**

**A2**

(12) **EUROPEAN PATENT APPLICATION**

(21) Application number: **81109697.3**

(22) Date of filing: **14.11.81**

(51) Int. Cl.³: **A 23 G 9/30**

(30) Priority: **25.11.80 IT 1525380 U**

(43) Date of publication of application:
**02.06.82 Bulletin 82/22**

(84) Designated Contracting States:
**AT BE CH DE FR GB LI LU NL SE**

(71) Applicant: **Carpigiani Bruto Macchine Automatiche S.p.A.**
**45, Via Emilia**
**I-40011 Anzola Emilia, Bologna(IT)**

(72) Inventor: **Manfroni, Ezio**
**Via Altopiano 56**
**I-40037 Sasso Marconi Bologna(IT)**

(74) Representative: **Porsia, Attilio et al,**
**c/o Succ. Ing. Fischetti & Weber Via Caffaro 3**
**I-16124 Genova(IT)**

(54) **Pasteurizing device for ice-cream liquid mixes.**

(57) A pasteurizing device, particularly for ice-cream liquid mixes, characterized in that it comprises a closed-bottom pasteurizing tank (1), a plate of heat conducting material (3) fixed to the outer side of the bottom of the tank (1) and covering said bottom nearly entirely; said plate having incorporated therein a coil (4) constituting the evaporator of a refrigerating apparatus and a heating resistance (5), and means (7 - 8 - 11 - 12) in said tank (1) for stirring the liquid mix contained therein.

Fig 1

EP 0 052 846 A2

CARPIGIANI BRUTO MACCHINE AUTOMATICHE S.p.A.

<u>Pasteurizing device for</u>
<u>ice-cream liquid mixes.</u>

This invention relates to the pasteurizing devices for liquids, and particularly to the pasteurizing devices for ice-cream liquid mixes.

The main object of the invention is to provide a pasteurizing device which is of simple and economical construction, has a high heat-exchange factor and is exempt from scarcely accessible stagnation zones, which might generate deposits and incrustations of easily perishable materials.

Further objects and features of this inventions will be better understood from the following description of a preferred embodiment thereof, made with reference to the accompanying drawing, wherein:

Fig. 1 is a diagrammatic longitudinal sectional view of a pasteurizing device according to the invention;

Fig. 2 is a top plan view of the device of Fig. 1.

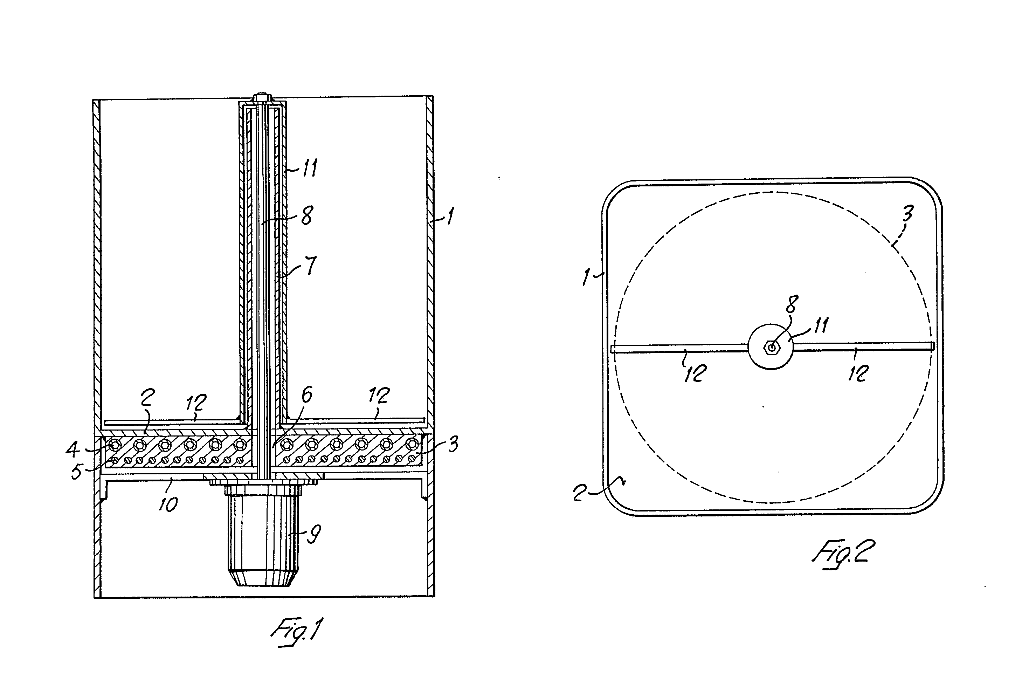

With reference to the drawing, 1 is the pasteurizing tank of the device according to the invention. This tank, which is preferably made of stainless steel sheet plate, can be of cylindrical configuration; however, said tank is preferably of square (or rectangular) configuration in cross-section as best shown in Fig. 2.

The lower end portion of the tank 1 is closed by a bottom wall 2. Welded to the outer side of the bottom wall 2, is a very thick plate 3 made of heat conducting material, for example aluminium or copper. Advantageously, the plate 3 is of circular configuration and covers most of the bottom plate 2. A coil 4 constituting the evaporator of a refrige= rating apparatus (not shown) is incorporated in the upper portion of the plate 3, closely adjacent to the bottom 2 of the tank 1. An electrical heating resistance 5 is incorporated in the lower portion of the said plate 3.

Both the plate 3 and the bottom 2 of the tank 1 are provided with a central hole 6, and a tube 7, co-axial with the hole 6, extends from the bottom 2 of the tank 1 up to the upper edge of said tank 1. The output shaft or spindle 8 of an electric motor 9, secured to a support structure of the tank 1, extends through said hole 6 and tube 7. The free end of said shaft 8 projects beyond the upper end of the tube 7, and fixed to said free end is an end portion of a tube 11, co-axial with the tube 7 and having an inside diameter which is greater than the outside diameter of the tube 7, and extending downwards close to the bottom of the tank 1. Secured to the lower end of the tube 11 are two radial arms 12, forming the stirrers of the liquid to be pasteurized.

The operation of the above device is now apparent. By virtue of the large heat-exchange surface provided by the plate 3, a very high performance of the pasteurizing cycle will be obtained. Due to the absence of scarcely accessible or stagnant zones or recesses, the device can be thoroughly cleaned, and for this purpose the tube 11 and associated stirrer, if desired, can be removed.

Obviously, the tank 1 can be provided with means for discharging the liquid mix. Said means can be of any suitable type. Particularly, the tank can be advantageously provided with the discharge device shown and described in the Italian Patent Application No. 12500 A/78 filed on March 1, 1978 in the name of the same applicant, and relating to a Dispensing Valve for dispensing liquids from containers where perishable liquid mixes are pasteurized and stocked.

## CLAIMS

1. A pasteurizing device, particularly for ice-cream liquid mixes, characterized in that it comprises a closed--bottom pasteurizing tank, a plate of heat conducting material fixed to the outer side of the bottom of the tank and covering said bottom nearly entirely; said plate having incorporated therein a coil constituting the evaporator of a refrigerating apparatus and a heating resistance; and means in said tank for stirring the liquid mix contained therein.

2. A pasteurizing device according to claim 1, characterized by the fact that said means for stirring the liquid mix comprises a first upright tube secured around a central hole in the bottom of the tank and underlying plate, and extending from the bottom of the tank up to near the upper edge thereof; a second upright tube co-axially surrounding said first tube with a radial clearance there= between, and extending from the free end of the first tube downwards close to the bottom of the tank; stirring blades secured to said second tube; a drive shaft extending through said hole in said plate and in the bottom of the tank and through said first tube and operatively connected to said second tube, so as to impart a rotary motion to said second tube; and means to actuate said shaft.

3. A device according to the preceding claims, characterized by the fact that said tank has a rectangular cross-section, preferably of square or substantially square configuration.

4. A device according to the preceding claims, characterized by the fact that said plate is made of aluminium.

Fig.2

Fig.1